(19) Europäisches Patentamt
European Patent Office
Office européen des brevets

(11) EP 1 132 424 B1

(12) EUROPÄISCHE PATENTSCHRIFT

(45) Veröffentlichungstag und Bekanntmachung des Hinweises auf die Patenterteilung:
**26.01.2005 Patentblatt 2005/04**

(51) Int Cl.⁷: **C08K 5/00**, B32B 27/18, C08L 45/00, C08L 67/00

(21) Anmeldenummer: **01103546.6**

(22) Anmeldetag: **19.02.2001**

(54) **Weisse, biaxial orientierte, schwer entflammbare und UV-stabilisierte Polyesterfolie mit Cycloolefincopolymer, Verfahren zu ihrer Herstellung und ihre Verwendung**

White, biaxially oriented, flameproof polyester film with cyclo-olefinic copolymer, method for its manufacture and its use

Feuille en polyester avec copolymère de cyclo-oléfines, résistant à la flamme, opaque-blanche, orientée biaxialement, procédé pour sa fabrication et son utilisation

(84) Benannte Vertragsstaaten:
**DE FR GB IT LU**

(30) Priorität: **28.02.2000 DE 10009286**

(43) Veröffentlichungstag der Anmeldung:
**12.09.2001 Patentblatt 2001/37**

(73) Patentinhaber: **Mitsubishi Polyester Film GmbH**
**65203 Wiesbaden (DE)**

(72) Erfinder:
- **Pfeiffer, Herbert, Dr.**
  **55126 Mainz (DE)**
- **Mahl, Hans**
  **65369 Walluf (DE)**
- **Hilkert, Gottfried, Dr.**
  **55291 Saulheim (DE)**
- **Murschall, Ursula, Dr.**
  **55283 Nierstein (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(56) Entgegenhaltungen:

| | |
|---|---|
| **EP-A- 0 376 599** | **WO-A-98/06575** |
| **DE-A- 19 643 280** | **DE-A- 19 827 845** |
| **GB-A- 2 344 596** | **US-A- 3 941 752** |
| **US-A- 4 656 220** | **US-A- 4 871 784** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 132 424 B1

Printed by Jouve, 75001 PARIS (FR)

## Beschreibung

Die vorliegende Erfindung betrifft eine weiße, biaxial orientierte, schwer entflammbare, UV-stabilisierte Polyesterfolie, die mindestens eine Schicht umfaßt, welche einen Polyesterrohstoff und ein Cycloolefincopolymer (COC) enthält. Die Erfindung betrifft ferner ein Verfahren zur Herstellung der Polyesterfolie sowie ihre Verwendung.

Weiße, biaxial orientierte Polyesterfolien sind nach dem Stand der Technik bekannt. Diese nach dem Stand der Technik bekannten Folien zeichnen sich entweder durch eine gute Herstellbarkeit, eine gute Optik oder durch ein akzeptables Verarbeitungsverhalten aus.

In der DE-A 2 353 347 wird ein Verfahren zur Herstellung einer ein- oder mehrschichtigen, milchigen Polyesterfolie beschrieben, das dadurch gekennzeichnet ist, daß man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, daß das bei der Herstellung der Folie anfallende Regenerat (im Wesentlichen ein Gemisch aus Polyesterrohstoff und Ethylen oder Propylen-Mischpolymer) nicht mehr eingesetzt werden kann, da ansonsten die Folie gelb wird. Das Verfahren ist damit aber unwirtschaftlich und die mit Regenerat produzierte Folie konnte sich am Markt nicht durchsetzen. Außerdem weist die Folie deutlich zu hohe Rauhigkeiten auf und hat damit ein sehr mattes Aussehen (sehr niedriger Glanz), was für viele Anwendungszwecke unerwünscht ist.

In der EP-A 0 300 060 wird eine einschichtige Polyesterfolie beschrieben, die außer Polyethylenterephthalat noch 3 bis 40 Gew.-% eines kristallinen Propylenpolymeren und 0,001 bis 3 Gew.-% einer oberflächenaktiven Substanz enthält. Die oberflächenaktive Substanz bewirkt, daß die Anzahl der Vakuolen in der Folie ansteigt und gleichzeitig ihre Größe in gewünschtem Maße abnimmt. Hierdurch wird eine höhere Opazität und eine niedrigere Dichte der Folie erzielt. Nachteilig an der Folie bleibt weiterhin, daß das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb wird. Das Verfahren ist damit aber unwirtschaftlich und die mit Regenerat produzierte Folie konnte sich am Markt nicht durchsetzen. Außerdem weist die Folie deutlich zu hohe Rauhigkeiten auf und hat damit ein sehr mattes Aussehen (sehr niedriger Glanz), was für zahlreiche Anwendungszwecke unerwünscht ist.

In der EP-A 0 360 201 wird eine mindestens zweischichtige Polyesterfolie beschrieben, die eine Basisschicht mit feinen Vakuolen enthält, deren Dichte zwischen 0,4 und 1,3 kg/dm$^3$ liegt und die mindestens eine Deckschicht aufweist, deren Dichte größer als 1,3 kg/dm$^3$ ist. Die Vakuolen werden durch Zugabe von 4 bis 30 Gew.-% eines kristallinen Propylenpolymeren und anschließender biaxialer Streckung der Folie erzielt. Durch die zusätzliche Deckschicht wird die Herstellbarkeit der Folie besser (keine Streifenbildung auf der Oberfläche der Folie), die Oberflächenspannung wird erhöht und die Rauhigkeit der laminierten Oberfläche kann verringert werden. Nachteilig bleibt weiterhin, daß das bei der Herstellung der Folie anfallende Regenerat (im Wesentlichen ein Gemisch aus Polyesterrohstoff und Propylen-Homopolymer) nicht mehr eingesetzt werden kann, da ansonsten die Folie gelb wird. Das Verfahren ist damit aber unwirtschaftlich und die mit Regenerat produzierte Folie konnte sich am Markt nicht durchsetzen. Außerdem weist die in den Beispielen aufgeführten Folien noch immer zu hohe Rauhigkeiten auf und hat damit ein mattes Aussehen (niedriger Glanz), was für viele Anwendungszwecke unerwünscht ist.

In der EP-A 0 795 399 wird eine zumindest zweischichtige Polyesterfolie beschrieben, die eine Basisschicht mit feinen Vakuolen enthält, deren Dichte zwischen 0,4 und 1,3 kg/dm$^3$ liegt und mindestens eine Deckschicht aufweist, deren Dichte größer als 1,3 kg/dm$^3$ beträgt. Die Vakuolen werden durch Zugabe von 5 bis 45 Gew.-% eines thermoplastischen Polymers zum Polyesterrohstoff in der Basis und anschließender biaxialer Streckung der Folie erzielt. Als thermoplastische Polymere werden u.a. Polypropylen, Polyethylen, Polymethyl-Penten, Polystyrol oder Polycarbonat genannt, wobei Polypropylen das bevorzugte thermoplastische Polymer ist. Durch die zusätzliche Deckschicht wird die Herstellbarkeit der Folie besser (keine Streifenbildung auf der Oberfläche der Folie), die Oberflächenspannung wird erhöht und die Rauhigkeit der laminierten Oberfläche kann den jeweiligen Erfordernissen angepasst werden. Eine weitere Modifizierung der Folie in der Basisschicht und/oder in den Deckschichten mit Weiß-Pigmenten (in der Regel $TiO_2$) und/oder mit optischen Aufhellern ermöglicht die Anpassung der Folieneigenschaften an die jeweiligen Anwendungserfordernisse. Nachteilig bleibt weiterhin, daß das bei der Herstellung der Folie anfallende Regenerat (im Wesentlichen ein Gemisch aus Polyesterrohstoff und dem additiven Rohstoff) nicht mehr eingesetzt werden kann, da ansonsten die Folie undefiniert in der Farbe verändert wird, was in hohem Maße unerwünscht ist. Das Verfahren ist damit unwirtschaftlich und die mit Regenerat produzierte Folie konnte sich am Markt nicht durchsetzen. Außerdem weist die in den Beispielen aufgeführten Folien noch immer zu hohe Rauhigkeiten auf und hat damit ein mattes Aussehen (niedriger Glanz), was für viele Anwendungszwecke unerwünscht ist.

In der DE-A 195 40 277 wird eine ein- oder mehrschichtige Polyesterfolie beschrieben, die eine Basisschicht mit feinen Vakuolen enthält, deren Dichte zwischen 0,6 und 1,3 kg/dm$^3$ liegt und eine Doppelbrechung in der Ebene aufweist, die von -0,02 bis 0,04 reicht. Die Vakuolen werden durch Zugabe von 3 bis 40 Gew.-% eines thermoplastischen Harzes zum Polyesterrohstoff in der Basis und anschließender biaxialer Streckung der Folie erzielt. Als thermoplastische Harze werden u.a. Polypropylen, Polyethylen, Polymethyl-Penten, cyclische Olefin-Polymere, Polyacrylharze, Polystyrol oder Polycarbonat genannt, wobei Polypropylen und Polystyrol bevorzugte Rohstoffe sind. Durch Einhalt der angegebenen Grenzen für die Doppelbrechung der Folie zeichnet sich die beanspruchte Folie insbesondere durch eine überlegene Reißfestigkeit und überlegene Isotropieeigenschaften aus. Nachteilig bleibt jedoch, daß das bei der Herstellung der Folie anfallende Regenerat nicht mehr eingesetzt werden kann, da ansonsten die Folie undefiniert in der Farbe verändert wird, was wiederum sehr unerwünscht ist. Das Verfahren ist damit unwirtschaftlich und die mit Regenerat produzierte Folie konnte sich am Markt nicht durchsetzen. Außerdem weisen die in den Beispielen aufgeführten Folien noch immer zu hohe Rauhigkeiten auf und haben damit ein mattes Aussehen (niedriger Glanz), was für viele Anwendungszwecke unerwünscht ist.

In der DE-A23 46 787 ist ein schwerentflammbarer Kunststoff beschrieben. Neben dem Kunststoff als solchem ist auch seine Verwendung zur Herstellung von Folien und Fasern beschrieben. Bei der Herstellung von Folien mit diesem, in der DE-A beanspruchten, phospholanmodifizierten Rohstoff zeigten sich aber folgende Defizite:

- Der Kunststoff ist sehr hydrolyseempfindlich und muß sehr gut vorgetrocknet werden.
- Beim Trocknen mit Trocknem, die dem Stand der Technik entsprechen, verklebt der Kunststoff, so daß die Herstellung einer Folie, wenn überhaupt, nur unter schwierigsten Bedingungen gelingt.
- Die unter extremen und unwirtschaftlichen Bedingungen hergestellten Folien verspröden bei Temperaturbelastungen, d. h. die mechanischen Eigenschaften gehen aufgrund der schnell auftretenden Versprödung stark zurück, so daß die Folie technisch unbrauchbar ist. Bereits nach 48 Stunden Temperaturbelastung tritt diese Versprödung auf.

Die Aufgabe der vorliegenden Erfindung bestand darin, eine weiße, biaxial orientierte Polyesterfolie bereitzustellen, die sich durch einen hohen Glanz und durch eine verbesserte Herstellbarkeit, d.h. geringe Herstellkosten, auszeichnet und die darüber hinaus eine hohe UV-Stabilität in Kombination mit guter Thermostabilität und einer schweren Entflammbarkeit aufweist. Insbesondere soll gewährleistet sein, daß das bei dem Herstellprozeß für die Folie immanent anfallene Verschnittmaterial (Regenerat) in einer Konzentration von 10 bis 70 Gew.-%, bezogen auf das Gesamtgewicht der Folie, wieder für den Herstellprozess eingesetzt werden kann, ohne daß dabei die physikalischen und optischen Eigenschaften der mit Regenerat hergestellten Folie nachteilig beeinflußt werden. Insbesondere soll durch die Regeneratzugabe keine nennenswerte Gelbfärbung der Folie auftreten.

Eine hohe UV-Stabilität bedeutet, daß die Folien durch Sonnenlicht oder andere UV-Strahlung nicht oder nur extrem wenig geschädigt werden, so daß sich die Folien für Außenanwendungen und/oder kritische Innenanwendungen eignen. Insbesondere sollen die Folien bei mehrjährigerAußenanwendung nicht vergilben, keine Versprödung oder Rissbildung der Oberfläche zeigen und auch keine Verschlechterung der mechanischen Eigenschaften aufweisen. Hohe UV-Stabilität bedeutet demnach, daß die Folie das UV-Licht absorbiert und Licht erst im sichtbaren Bereich durchläßt.

Eine schwere Entflammbarkeit bedeutet, daß die weiße Folie in einer sogenannten Brandschutzprüfung die Bedingungen nach DIN 4102, Teil 2, und insbesondere die Bedingungen nach DIN 4102, Teil 1, erfüllt und in die Baustoffklasse B 2, insbesondere B1, der schwer entflammbaren Stoffe eingeordnet werden kann.

Des weiteren soll die Folie den UL-Test 94, den sogenannten "Vertical Burning Test for Flammability of Plastic Material", bestehen, so daß sie in die Klasse 94 VTM-0 eingestuft werden kann. Das bedeutet, daß die Folie 10 Sekunden nach Wegnahme des Bunsenbrenners nicht mehr brennt, daß nach 30 Sekunden kein Glühen mehr beobachtet wird und daß während der ganzen Zeit kein Abtropfen festgestellt wird.

Zu der wirtschaftlichen Herstellung zählt, daß die Kunststoffe bzw. die Kunststoffkomponenten, die zur Herstellung der schwer entflammbaren Folie benötigt werden, mit Industrietrocknern, die dem Standard der Technik entsprechen, getrocknet werden können. Wesentlich ist, daß die Rohstoffe nicht verkleben und nicht thermisch abgebaut werden. Zu diesen Industrietrocknern nach dem Stand der Technik zählen Vakuumtrockner, Wirbelschichttrockner, Fließbetttrockner und Festbetttrockner (Schachttrockner). Diese Trockner arbeiten im Schnitt bei Temperaturen zwischen 100 und 170 °C, wo üblicherweise flammhemmend ausgerüstete Kunststoffe verkleben und bergmännisch abgebaut werden müssen, so daß keine Folienherstellung möglich ist.

Bei dem am schonendsten trocknenden Vakuumtrockner durchläuft der Kunststoff einen Temperaturbereich von ca. 30°C bis 130 °C bei einem Vakuum von 50 mbar. Danach ist ein sogenanntes Nachtrocknen in einem Hopper bei Temperaturen von 100 bis 130 °C und einer Verweilzeit von 3 bis 6 Stunden erforderlich. Selbst bei dieser Prozedur verklebt der bekannte Kunststoff extrem.

Eine gute Thermostabilität bedeutet, daß die Folie nach 100 Stunden Tempervorgang bei 100 °C in einem Umluftofen keine Versprödung und keine schlechten mechanischen Eigenschaften aufweist.

Die Aufgabe wird erfindungsgemäß durch eine weiße, biaxial orientierte, schwer entflammbare und UV-stabilisierte Polyesterfolie mit mindestens einer Basisschicht aus Polyesterrohstoff gelöst, deren kennzeichnende Merkmale darin zu sehen sind, daß zum indest die Basisschicht zusätzlich Cycloolefincopolymer (COC) in einer Menge von

2 bis 60 Gew.-%, bezogen auf das Gewicht der Basisschicht enthält, wobei die Glasübergangstemperatur des Cycloolefincopolymeren (COC) im Bereich von 70 bis 270 °C liegt, und daß die Folie mindestens einen UV-Stabilisator als Lichtschutzmittel und ein Flammschutzmittel enthält, wobei mindestens das Flammschutzmittel als Masterbatch dem Polyesterrohstoff bei der Folienherstellung direkt zudosiert wird, vorzugsweise auch der UV-Stabilisator.

Unter einer weißen, biaxial orientierten Polyesterfolie im Sinne der vorliegenden Erfindung wird eine solche Folie bezeichnet, die einen Weißgrad von mehr als 70 %, bevorzugt von mehr als 75 % und besonders bevorzugt von mehr als 80 %, aufweist. Desweiteren beträgt die Opazität der erfindungsgemäßen Folie mehr als 55 %, bevorzugt mehr als 60 % und besonders bevorzugt mehr als 65 %.

Zur Erzielung des gewünschten Weißgrades der erfindungsgemäßen Folie soll die Menge an COC in der Basisschicht größer als 2 Gew.-% sein, andernfalls ist der Weißgrad kleiner als 70 %. Ist die Menge an COC andererseits größer als 60 Gew.-%, dann läßt sich die Folie nicht mehr wirtschaftlich herstellen, da sie sich nicht mehr verfahrenssicher verstrecken lässt.

Weiterhin ist es notwendig, daß die Glasübergangstemperatur des eingesetzten COCs größer als 70 °C ist. Andernfalls, wenn die Glasübergangstemperatur des eingesetzten COCs kleiner als 70 °C ist, ist das Rohstoffgemisch schlecht verarbeitbar, weil es sich nur noch schlecht extrudieren läßt. Der gewünschte Weißgrad wird nicht mehr erreicht und das eingesetzte Regenerat führt zu einer Folie, die zu einer erhöhten Gelbfärbung neigt. Ist andererseits die Glasübergangstemperatur des ausgewählten COCs größer als 270 °C, dann wird sich die Rohstoffmischung im Extruder nicht mehr ausreichend homogenisieren lassen. Dies hat dann eine Folie mit unerwünscht inhomogenen Eigenschaften zur Folge.

In der bevorzugten Ausführungsform der erfindungsgemäßen Folie liegt die Glasübergangstemperatur der verwendeten COCs in einem Bereich von 90 bis 250 °C und in der besonders bevorzugten Ausführungsform in einem Bereich von 110 bis 220 °C.

Überraschenderweise wurde gefunden, daß durch den Zusatz eines COCs in der vorstehend beschriebenen Weise eine weiße, opake, glänzende Folie hergestellt werden kann.

Entsprechend der Menge und der Art des zugegebenen COCs kann der Weißgrad und die Opazität der Folie exakt eingestellt und den jeweiligen Anforderungen angepasst werden. Durch diese Maßnahme ist es möglich, auf andere gängige weiß- und opakmachende Additive weitgehend zu verzichten. Weiterhin war es sehr überraschend, daß die Oberflächenrauhigkeit der Folie wesentlich geringer und damit der Glanz der Folie wesentlich höher ist, als bei vergleichbaren Folien nach dem Stand der Technik. Geradezu sensationell war der zusätzliche Effekt, daß das Regenerat trotz der Anwesenheit von UV-Stabilisator und Flammschutzmittel keinerlei Neigung zur Gelbfärbung zeigt, wie dies bei dem Einsatz polymerer Additive, empfindlicher UV-Stabilisatoren und herkömmlicher Flammschutzmittel nach dem Stand der Technik beobachtet wird.

Alle diese beschriebenen Merkmale waren nicht vorhersehbar. Dies umso mehr, da COCs zwar offensichtlich mit Polyethylenterephthalat weitgehend inkompatibel sind, bekanntlich aber mit ähnlichen Streckverhältnissen und Strecktemperaturen orientiert werden wie Polyethylenterephthalat. Unter diesen Voraussetzungen hätte der Fachmann erwartet, daß bei diesen Herstellbedingungen keine weiße, opake Folie mit hohem Glanz produziert werden kann.

In den bevorzugten und den besonders bevorzugten Ausführungsformen zeichnet sich die erfindungsgemäße Folie durch einen hohen/bzw. durch einen besonders hohen Weißgrad und eine hohe/bzw. durch eine besonders hohe Opazität aus, wobei die Farbänderung der Folie durch die Regeneratzugabe äußerst gering bleibt.

Die erfindungsgemäße Folie enthält mindestens einen UV-Stabilisator als Lichtschutzmittel, der vorzugsweise über die sogenannte Masterbatch-Technologie direkt bei der Folienherstellung zudosiert wird, wobei die Menge an UV-Stabilisator im Bereich zwischen 0,01 und 5 Gew.-%, bezogen auf das Gewicht der den UV-Stabilisator enthaltenden Schicht, liegt.

Licht, insbesondere der ultraviolette Anteil der Sonnenstrahlung, d. h. der Wellenlängenbereich von 280 bis 400 nm, induziert bei Thermoplasten Abbauvorgänge, als deren Folge sich nicht nur das visuelle Erscheinungsbild durch eintretende Farbänderung bzw. Vergilbung ändert, sondern durch die auch die mechanisch-physikalischen Eigenschaften der Formteile oder Folien aus den Thermoplasten äußerst negativ beeinflußt werden.

Die Unterbindung dieser photooxidativen Abbauvorgänge ist von erheblicher technischer und wirtschaftlicher Bedeutung, weil andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beachtlich zu und ist unterhalb von 300 nm sehr ausgeprägt. Die maximale Absorption liegt im Bereich zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse
der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in α-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren, d.h. UV-Absorber als Lichtschutzmittel, sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für hell gefärbte Folien ungeeignet, da sie zur Verfärbung oder Farbänderung führen.

Geeignete UV-Stabilisatoren als Lichtschutzmittel sind UV-Stabilisatoren, die mindestens 70 %, vorzugsweise 80 %, besonders bevorzugt 90 %, des UV-Lichts im Wellenlängenbereich von 180 nm bis 380 nm, vorzugsweise von 280 bis 350 nm, absorbieren. Diese sind insbesondere dann geeignet, wenn sie im Temperaturbereich von 260 bis 300 °C thermisch stabil sind, d.h. sich nicht in Spaltprodukte zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Es war für die Fachwelt völlig überraschend, daß der Einsatz der erfindungsgemäßen Kombination aus COC plus UV-Stabilisatoren plus Flammschutzmittel zu brauchbaren Folien mit hervorragenden Eigenschaften führte. Der Fachmann hätte vermutlich zunächst versucht, eine gewisse UV-Stabilität über einen Oxidationsstabilisator zu erreichen, hätte jedoch nach Bewitterung sofort festgestellt, daß die Folie schnell gelb wird.

Vor dem Hintergrund, daß UV-Stabilisatoren, die das UV-Licht absorbieren und somit Schutz bieten, aus der Literatur bekannt sind, hätte der Fachmann dann wohl handelsübliche UV-Stabilisatoren eingesetzt. Dabei hätte er festgestellt, daß

- der UV-Stabilisator eine mangelnde thermische Stabilität hat und sich bei Temperaturen zwischen 200 und 240 ° C in Spaltprodukte zersetzt oder ausgast
- er große Mengen (ca. 10 bis 15 Gew.-%) an UV-Stabilisator einarbeiten muss, damit das UV-Licht wirklich wirksam absorbiert wird und damit die Folie nicht geschädigt wird.

Bei diesen hohen Konzentrationen hätte er aber festgestellt, daß die Folie schon nach der Herstellung gelb ist, bei Gelbzahlunterschieden (YID) um die 25. Des weiteren hätte er festgestellt, daß die mechanischen Eigenschaften negativ beeinflusst werden. Beim Verstrecken hätte er ungewöhnliche Probleme bekommen wie:

- Abrisse wegen mangelnder Festigkeit, d.h. E-Modul;
- Düsenablagerungen, was zu Profilschwankungen führt;
- Walzenablagerungen vom UV-Stabilisator, was zur Beeinträchtigung der optischen Eigenschaften (schlechte Trübung, Klebedefekt, inhomogene Oberfläche) führt;
- Ablagerungen in Streck- und Fixierrahmen, die auf die Folie tropfen.

Daher war es mehr als überraschend, daß bereits mit niedrigen Konzentrationen des erfindungsgemäßen UV-Stabilisators ein hervorragender UV-Schutz erzielt wurde. Sehr überraschend war, daß sich bei diesem hervorragenden UV-Schutz

- der Gelbwert der Folie im Vergleich zu einer nicht-stabilisierten Folie im Rahmen der Meßgenauigkeit nicht ändert;
- keine Ausgasungen, keine Düsenablagerungen, keine Rahmenausdampfungen einstellten, wodurch die Folie eine exzellente Optik und ein ausgezeichnetes Profil aufweist und eine ausgezeichnete Planlage besitzt.;
- sich die UV-stabilisierte Folie durch eine hervorragende Streckbarkeit auszeichnet, so daß sie verfahrenssicher und stabil auf sogenannten »high speed film lines« bis zu Geschwindigkeiten von 420 m/min produktionssicher hergestellt werden kann.

Dam it ist die Folie auch wirtschaftlich rentabel. Des weiteren war es sehr überraschend, daß auch das Regenerat wieder einsetzbar ist, ohne den Gelbwert der Folie negativ zu beeinflussen.

Die erfindungsgemäße Folie enthält ggf. zusätzlich einen optischen Aufheller, wobei der optische Aufheller in Mengen im Bereich von 0 bis 50.000 ppm, insbesondere von 20 bis 30.000 ppm, besonders bevorzugt von 50 bis 25.000 ppm, bezogen auf das Gewicht des Polyesterrohstoffs, eingesetzt wird. Vorzugsweise wird der optische Aufheller über die sogenannte Masterbatch-Technologie bei der Folienherstellung dem Polyesterrohstoff zudosiert.

Die ggf. zudosierten optischen Aufheller sind in der Lage, UV-Strahlen im Bereich von 360 bis 380 nm zu absorbieren und als längerwelliges, sichtbares blauviolettes Licht wieder abzugeben.

Geeignete optische Aufheller sind Bis-benzoxazole, Phenylcumarine und Bissterylbiphenyle, insbesondere

Phenylcumarin, besonders bevorzugt sind Triazinphenylcumarin, die unter der Produktbezeichnung ®Tinopal bei Ciba-Geigy, Basel, Schweiz, erhältlich sind, oder ®Hostalux KS (Clariant, Deutschland) sowie ®Eastobrite OB-1 (Eastman).

Sofern zweckmäßig können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere ®Sudanblau 2 (BASF, Ludwigshafen, Bundesrepublik Deutschland) erwiesen.

Die blauen Farbstoffe werden in Mengen von 0 bis 10.000 ppm, insbesondere 20 bis 5.000 ppm, besonders bevorzugt 50 bis 1.000 ppm, bezogen auf das Gewicht des Polyesterrohstoffs, eingesetzt.

In einer ganz besonders bevorzugten Ausführungsform enthält die erfindungsgemäße Folie 0,1 bis 5,0 Gew.-% 2-(4,6-Diphenyl-1,3,5-triazin-2-yl)-5-(hexyl)oxy-phenol der Formel:

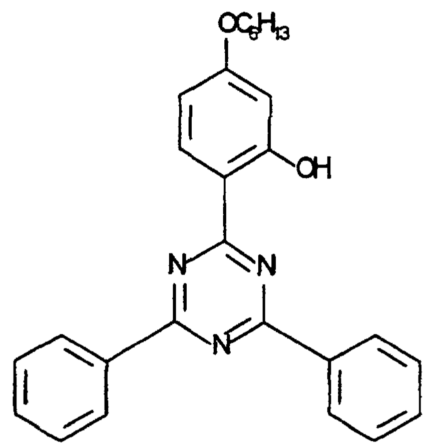

oder 0,1 bis 5,0 Gew.-% 2,2-Methylen-bis(6-(2H-benzotriazol-2-yl)-4-(1,1,2,2-tetramethylpropyl)-phenol der Formel

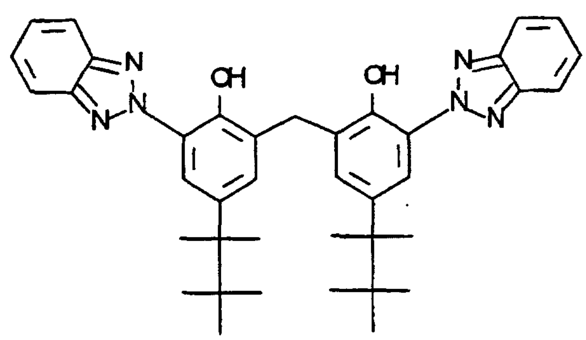

In einer weiteren Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,1 und 5,0 Gew.-% liegt, bezogen auf das Gewicht der Basisschicht, besonders bevorzugt im Bereich von 0,5 bis 3,0 Gew.-%.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht, die das Flammschutzmittel enthält, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Desweiteren ist die geringe Lichtbeständigkeit einer damit ausgerüsteten Folie neben der Entwicklung von Halogenwasserstoffen im Brandfall extrem nachteilig.

Geeignete Flammschutzmittel, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, daß die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali-/Erdalkalistearate und/ oder Alkali-/Erdalkalicarbonate in Mengen im Bereich von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind besonders vorteilhaft.

Es war mehr als überraschend, daß mittels Masterbatch-Technologie, einer geeigneten Vortrocknung und/ oder Vorkristallisation und gegebenenfalls Einsatz von geringen Mengen eines Hydrolysestabilisators eine schwer entflammbare und thermoformbare Folie mit dem geforderten Eigenschaftsprofil wirtschaftlich und vor allen Dingen ohne Verklebung im Trockner herstellbar ist und daß die Folie nach Temperaturbelastung nicht versprödet und beim Knicken nicht bricht.

Sehr überraschend war, daß bei diesem hervorragenden Resultat und dem geforderten Flammschutz und der hohen UV-Stabilität:

- Der Gelbwert der Folie im Vergleich zu einer nicht ausgerüsteten Folie im Rahmen der Meßgenauigkeit nicht negativ beeinflußt ist;
- keine Ausgasungen, keine Düsenablagerungen, keine Rahmenausdampfungen auftreten, wodurch die Folie eine exzellente Optik aufweist, ein ausgezeichnetes Profil und eine hervorragende Planlage hat;
- sich die schwer entflammbare, UV-stabile Folie durch einen hervorragende Streckbarkeit auszeichnet, so daß sie verfahrenssicher und stabil auf »highspeed film-lines« bei Geschwindigkeiten von bis zu 420 m/min produktionssicher hergestellt werden kann.

Damit ist eine solche Folie auch wirtschaftlich rentabel.

Die erfindungsgemäße Folie ist einschichtig oder mehrschichtig. Einschichtige Ausführungsformen sind wie die nachstehend beschriebene COC-haltige Schicht aufgebaut. Mehrschichtige Ausführungsformen sind mindestens zweischichtig und umfassen immer die COC-haltige Schicht und zumindest eine weitere Schicht, wobei die COC-haltige Schicht die Basisschicht ist, aber zusätzlich auch die Zwischen- oder die Deckschicht der mehrschichtigen Folie bilden kann. In einer bevorzugten Ausführungsform bildet die COC-haltige Schicht die Basisschicht der Folie mit mindestens einer, vorzugsweise mit beidseitigen Deckschicht/en, wobei gegebenenfalls einseitig eine oder beidseitig Zwischenschicht/en vorhanden sein kann/können. In einer weiteren bevorzugten Ausführungsform bildet die COC-haltige Schicht auch eine Zwischenschicht der Mehrschichtfolie. Weitere Ausführungsformen mit COC-haltigen Zwischenschichten sind fünfschichtig aufgebaut und haben neben der COC-haltigen Basisschicht beidseitig COC-haltige Zwischenschichten. In einerweiteren Ausführungsform kann die COC-haltige Schicht zusätzlich zur Basisschicht, ein- oder beidseitig Deckschicht/en auf der Basis- oder Zwischenschicht bilden. Die Basisschicht ist im Sinne der vorliegenden Erfindung diejenige Schicht, die mehr als 50 bis 100 %, vorzugsweise 70 bis 90 %, der Gesamtfoliendicke ausmacht. Die Deckschicht ist in jedem Fall die Schicht, welche die äußere Schicht der Folie bildet, wobei es erfindungsgemäß bevorzugt ist, daß auf der COC-haltigen Basisschicht eine oder zwei Deckschicht/en angeordnet ist/sind und daß sowohl der UV-Stabilisator als auch das Flammschutzmittel in der/den Deckschichten enthalten sind.

Die jeweilige Ausführungsform der Erfindung ist eine nicht transparente, weiße Folie. Unter nicht transparenten Folien werden im Sinne der vorliegenden Erfindung solche Folien verstanden, deren Lichtdurchlässigkeit nach ASTM-D 1003-77 unter 95 %, vorzugsweise unter 75 %, liegt

Die COC-haltige Schicht (die Basisschicht) der erfindungsgemäßen Folie enthält einen Polyesterrohstoff, vorzugsweise ein Polyesterhomopolymeres, ein COC, den UV-Stabilisator, das Flammschutzmittel sowie gegebenenfalls weitere Additive in jeweils wirksamen Mengen. Im allgemeinen enthält diese Schicht mindestens 20 Gew.-%, vorzugsweise 40 bis 96 Gew. -%, insbesondere 70 bis 96 Gew. -%, Polyesterrohstoff, bezogen auf das Gewicht der Schicht.

Die Basisschicht der Folie enthält als Hauptbestandteil einen thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (=Polyethylen-2,6-naphthalat, PEN), aus 1,4-Bis-hydroximethyl-cyclohexan und Terephthalsäure (=Poly-1,4-cyclohexandimethylenterephthalat, PCDT) sowie aus Ethylenglykol, Naphthalin-2,6-dicarbonsäure und Biphenyl-4,4'-dicarbonsäure (=Polyethylen-2,6-naphthalatbibenzoat,PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol-und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (A=Deckschicht 1) oder der Schicht C (C=Deckschicht 2) einer mehrschichtigen Folie ABC (B=Basisschicht) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 KohlenstoffAtomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für-$CH_2$-, -$C(CH_3)_2$-, -$C(CF_3)_2$-, -O-, -S-oder-$SO_2$-steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$)-Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestem und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die COC-haltige Schicht (Basisschicht) bzw. die Folie bei einschichtigen Ausführungsformen ein Cycloolefincopolymeres (COC) in einer Menge von minimal 2,0 Gew.-%, bevorzugt 4 bis 50 Gew.-% und besonders bevorzugt 6 bis 40 Gew.-%, bezogen auf das Gewicht der Basisschicht bzw. bezogen auf das Gewicht der Folie bei einschichtiger Ausführungsform. Es ist wesentlich für die vorliegende Erfindung, daß das COC mit dem Polyethylenterephthalat nicht verträglich ist und mit diesem keine homogene Mischung in der Schmelze bildet.

Cycloolefinpolymere sind Homopolymerisate oder Copolymerisate, welche polymerisierte Cycloolefineinheiten und gegebenenfalls acyclische Olefine als Comonomer enthalten. Für die vorliegende Erfindung sind Cycloolefinpolymere geeignet, die 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefneinheiten enthalten. Bevorzugt sind insbesondere Polymere, die aus den Monomeren der cyclischen Olefinen der Formeln I, II, III, IV, V oder VI aufgebaut sind:

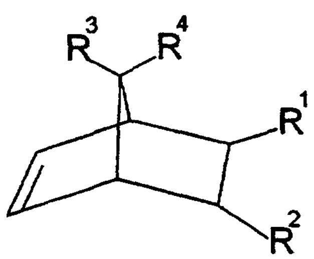
(I)

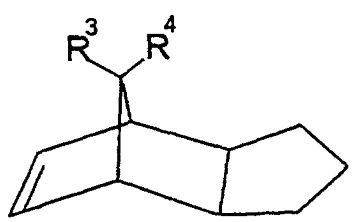
(II)

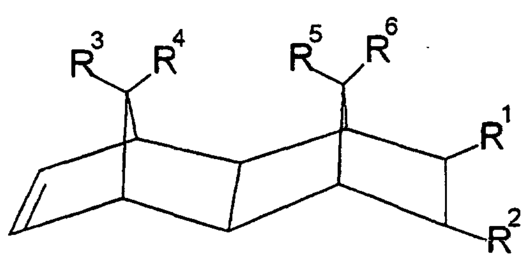
(III)

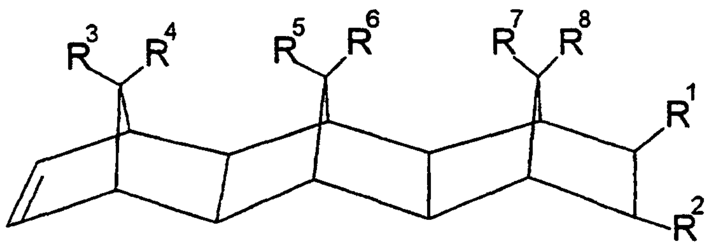

(IV)

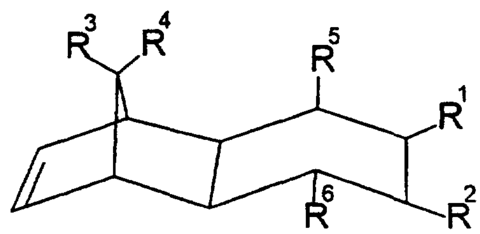

(V)

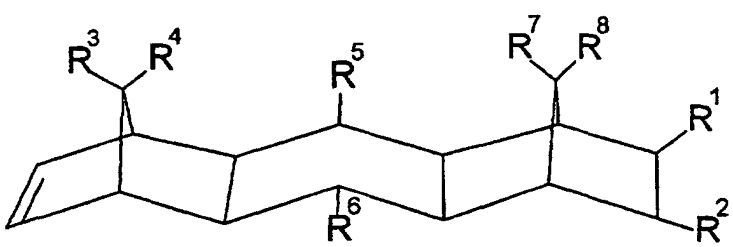

(VI)

In diesen Formeln sind $R^1$, $R^2$, $R^3$, $R^4$, $R^5$, $R^6$, $R^7$ und $R^8$ gleich oder verschieden und bedeuten ein Wasserstoffatom oder einen $C_1$-$C_{30}$-Kohlenwasserstoffrest; oder zwei oder mehrere der Reste $R^1$ bis $R^8$ sind cyclisch verbunden, wobei gleiche Reste in den verschiedenen Formeln gleiche oder unterschiedliche Bedeutung haben. $C_1$-$C_{30}$-Kohlenwasserstoffreste sind beispielsweise lineare oder verzweigte $C_1$-$C_8$-Alkylreste, $C_6$-$C_{18}$-Arylreste, $C_7$-$C_{20}$-Alkylenarylreste oder cyclische $C_3$-$C_{20}$-Alkylreste oder acyclische $C_2$-$C_{20}$-Alkenylreste.

Gegebenenfalls können die COCs 0 bis 45 Gew.-%, bezogen auf die Gesamtmasse des Cycloolefinpolymeres, polymerisierte Einheiten mindestens eines monocyclischen Olefins der Formel VII enthalten:

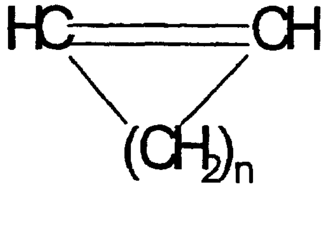

(VII)

Hierin ist n eine Zahl von 2 bis 10.

Gegebenenfalls können die COCs 0 bis 99 Gew.-%, bezogen auf die Gesamtmasse an COC, polymerisierte Einheiten eines acyclischen Olefins der Formel VIII enthalten:

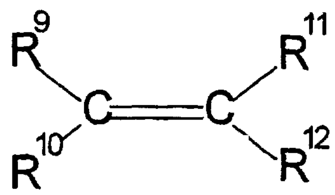

(VIII)

Hierin sind $R^9$, $R^{10}$, $R^{11}$, und $R^{12}$ gleich oder verschieden und bedeuten ein Wasserstoffatom oder $C_1$-$C_{10}$-Kohlenwasserstoffreste, z.B. einen $C_1$-$C_8$-Alkylrest oder $C_6$-$C_{14}$-Arylrest.

Ebenfalls prinzipiell geeignet sind Cycloolefinpolymere, welche durch ringöffnende Polymerisation mindestens eines der Monomere der Formeln I bis VI und anschließende Hydrierung erhalten werden.

Cycloolefinhomopolymere sind aus einem Monomeren der Formeln I-VI aufgebaut. Diese Cycloolefin-Polymere sind für die Zwecke der vorliegenden Erfindung weniger geeignet. Für die Zwecke der vorliegenden Erfindung sind Cycloolefincopolymerisate (COC) geeignet, welche mindestens ein Cycloolefin der Formeln I bis VI und acyclische Olefine der Formel VIII als Comonomer enthalten. Dabei sind als acyclische Olefine solche bevorzugt, die 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen COCs.

Unter den vorstehend beschriebenen COCs sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind auch COCs, die polymerisierte Einheiten acyclischer Olefine, insbesondere Ethylen, enthalten. Wiederum besonders bevorzugt sind Norbornen/Ethylen- und Tetracyclododecen/Ethylen-Copolymere, welche 5 bis 80 Gew.-%, vorzugsweise 10 bis 60 Gew.-%, Ethylen enthalten (bezogen auf das Gewicht des Copolymeren).

Die vorstehend generisch beschriebenen Cycloolefinpolymeren weisen im allgemeinen Glasübergangstemperaturen $T_g$ im Bereich zwischen -20 °C und 400 °C auf. Für die Erfindung sind aber im wesentlichen solche COCs verwendbar, die eine Glasübergangstemperatur $T_g$ von größer als 70 °C, vorzugsweise größer als 90 °C und insbesondere größer als 110 °C aufweisen. Die Viskositätszahl (Dekalin, 135 °C, DIN 53 728) liegt zweckmäßigerweise zwischen 0,1 und 200 ml/g, bevorzugt zwischen 50 und 150 ml/g.

Die Herstellung der COCs geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von COCs mit Katalysatoren, basierend auf löslichen Metallocenkomplexen. Auf die in obengenannten Schriften beschriebenen Herstellungsverfahren von COC wird hiermit ausdrücklich Bezug genommen.

Die COCs werden entweder als reines Granulat oder als granuliertes Konzentrat (Masterbatch) in die Folie eingearbeitet, indem das Polyestergranulat oder -pulver mit dem COC bzw. dem COC-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren zweckmäßig, daß die Extrusionstemperatur oberhalb der Glasübergangstemperatur $T_g$ des COCs liegt, im allgemeinen mindestens 5 K, vorzugsweise 10 bis 180 K, insbesondere 15 bis 150 K, über der Glasübergangstemperatur des COCs.

Für die Zwischenschichten und für die Deckschichten können prinzipiell die gleichen Polymeren verwendet werden, wie für die Basisschicht. Daneben können in den Deckschichten auch andere Materialien enthalten sein, wobei dann die Deckschichten bevorzugt aus einem Gemisch von Polymeren, einem Copolymeren oder einem Homopolymeren, bestehen, welches Ethylen-2,6-naphthalat-Einheiten und Ethylenterephthalat-Einheiten enthalten. Bis zu 30 Mol-% der Polymeren können aus weiteren Comonomeren (z.B. Ethylen-isophthalat-Einheiten.) bestehen.

Die Basisschicht und die anderen Schichten können zusätzlich übliche Additive, wie Stabilisatoren, Antiblockmittel und andere Füller, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Als Additive können auch Mischungen von zwei und mehreren verschiedenen Antiblockmitteln oder Mischungen von Antiblockmitteln gleicher Zusammensetzung, aber unterschiedlicher Korngröße gewählt werden. Die Partikeln können den Polymeren der einzelnen Schichten der Folie in den jeweils vorteilhaften Mengen, z.B. als glykolische Dispersion während der Polykondensation oder über Masterbatche bei der Extrusion zugegeben werden. Als besonders geeignet haben sich Pigmentkonzentrationen von 0 bis 25 Gew.-% erwiesen (bezogen auf das Gewicht der jeweiligen Schicht). Eine detaillierte Beschreibung der Antiblockmittel findet sich beispielsweise in der EP-A-0 602 964.

Zu Verbesserung des Weißgrades der Folie kann die Basisschicht oder die anderen zusätzlichen Schichten eine weitere Pigmentierung enthalten. Hierbei hat es sich als besonders günstig erwiesen, als zusätzliche Additive Bariumsulfat mit einer Korngröße von 0,3 bis 0,8 µm, vorzugsweise von 0,4 bis 0,7 µm oder Titandioxid mit einer Korngröße von 0,05 bis 0,3 µm, auszuwählen. Die Folie erhält hierdurch ein brillantem, weißes Aussehen. Die Menge an Bariumsulfat oder Titandioxid liegt im Bereich von 1 bis 25 Gew.-%, vorzugsweise von 1 bis 20 Gew.-%, und ganz besonders bevorzugt von 1 bis 15 Gew.-%.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 400 µm, wobei 8 bis 300 µm, insbesondere 10 bis 300 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der Deckschicht/en wird unabhängig von den anderen Schichten gewählt und liegt bevorzugt im Bereich von 0,1 bis 10 µm, insbesondere von 0,2 bis 5 µm, vorzugsweise von 0,3 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

In einer besonderen Ausführungsform können die Deckschichten auch aus einem Polyethylennaphthalat-Homopolymeren oder aus einem Ethylenterephthalat-Ethylennaphthalat-Copolymeren oder einem Compound bestehen.

In dieser Ausführungsform haben die Thermoplaste der Deckschichten ebenfalls eine ähnliche Standardviskosität wie das Polyethylenterephthalat der Basisschicht.
In der mehrschichtigen Ausführungsform ist der UV-Stabilisator vorzugsweise in den Deckschichten enthalten. Bei Bedarf kann zusätzlich auch die Basisschicht mit UV-Stabilisator ausgerüstet sein.

In der mehrschichtigen Ausführungsform ist das Flammschutzmittel vorzugsweise in der Basisschicht enthalten. Jedoch können bei Bedarf auch die Deckschichten mit Flammschutzmittel ausgerüstet sein.

In einer anderen Ausführungsform können auch Flammschutzmittel und UV-Stabilisator in den Deckschichten enthalten sein. Bei Bedarf und hohen Brandschutzanforderungen kann die Basisschicht additiv eine sogenannte "Grundausrüstung" an Flammschutzmittel enthalten.

Anders als in der einschichtigen Ausführungsform bezieht sich hier die Menge an Flammschutzmittel und UV-Stabilisator in Gewichtsprozent auf das Gewicht der jeweils mit den Mitteln ausgerüsteten Schicht.

Ganz überraschend haben Bewitterungsversuche nach der Testspezifikation ISO 4892 mit dem Atlas C165 Weather Ometer gezeigt, daß es im Falle einer dreischichtigen Folie durchaus ausreichend ist, die 0,5 µm bis 2 µm dicken Deckschichten mit UV-Stabilisatoren auszurüsten, um eine verbesserte UV-Stabilität zu erreichen.

Brandversuche nach DIN 4102 Teil 1 und Teil 2 sowie der UL-Test 94 haben ebenso überraschend gezeigt, daß erfindungsgemäße Folien die Anforderungen erfüllen.

Dadurch werden die mit der bekannten Koextrusionstechnologie hergestellten schwerentflammbaren, UV-stabilisierten, mehrschichtigen Folien im Vergleich zu den komplett UV-stabilisierten und flammausgerüsteten Monofolien wirtschaftlich extrem interessant, da deutlich weniger Additive zum Erreichen einer vergleichbaren Schwerentflammbarkeit und UV-Stabilität benötigt werden.

Bewitterungstests haben ergeben, daß die erfindungsgemäßen schwerentflammbaren, weißen, UV-stabilisierten Folien selbst nach 5 bis 7 Jahren (aus den im einzelnen durchgeführten Bewitterungstests hochgerechnet) Außenanwendung im allgemeinen keine erhöhte Vergilbung, keine Versprödung, keinen Glanzverlust der Oberfläche, keine Rißbildung an der Oberfläche und keine Verschlechterung der mechanischen Eigenschaften aufweisen.

Bei der Herstellung der Folie wurde festgestellt, daß sich die schwer entflammbare, UV-stabilisierte Folie hervorragend in Längs- und in Querrichtung ohne Abrisse orientieren läßt. Des weiteren wurden keinerlei Ausgasungen im Produktionsprozess gefunden, die sich auf die Anwesenheit von UV-Stabilisator oder Flammschutzmittel zurückführen ließen, was erfindungswesentlich ist, da die meisten herkömmlichen UV-Stabilisatoren und Flammschutzmittel bei Extrusionstemperaturen von über 260 °C sehr störende, unangenehme Ausgasungen zeigen, die auf die Zersetzung dieser Verbindungen unter den Verarbeitungsbedingungen zurückzuführen sind, und damit untauglich sind.

Überraschenderweise erfüllen schon erfindungsgemäße Folien im Dickenbereich von 5 bis 300 µm die Baustoffklasse B1 nach DIN 4102 Teil 1 und den UL-Test 94.

Bei der Herstellung derweißen, schwer entflammbaren, UV-stabilen Folie wurde weiter festgestellt, daß sich das Flammschutzmittel mittels Masterbatch-Technologie, einer geeigneten Vortrocknung bzw. Vorkristallisation des Flammschutzmasterbatches ohne Verklebungen im Trockner einarbeiten läßt, so daß eine wirtschaftliche Folienproduktion möglich ist.

Mehr als überraschend war, daß durch geringe Zugabe eines Hydrolysestabilisators im Flammschutz-Masterbatch die Einarbeitung nochmals erleichtert wird, so daß ohne Probleme die Durchsätze und damit die Produktionsgeschwindigkeiten erhöht werden können. In einer sehr speziellen Ausführungsform enthält die Folie noch in den Schichten, die mit Flammschutzmittel ausgerüstet sind, geringe Mengen eines Hydrolysestabilisators.

Messungen ergaben, daß die erfindungsgemäße Folie bei Temperaturbelastungen von 100 °C über einen längeren Zeitraum nicht versprödet, was mehr als überraschend ist. Dieses Resultat ist auf die synergistische Wirkung von geeigneter Vorkristallisation, Vortrocknung, Masterbatch-Technologie und Ausrüstung mit UV-Stabilisator zurückzuführen.

Des weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder für den Messebau und andere Werbeartikel, wo Brandschutz gewünscht wird, eignet.

Die Erfindung betrifft weiterhin ein Verfahren zur Herstellung der erfindungsgemäßen Polyesterfolie nach dem an sich bekannten Extrusions- oder Koextrusionsverfahren.

Erfindungsgemäß wird dabei das Flammschutzmittel, ggf. mit dem Hydrolysestabilisator, über die Masterbatch-Technologie zugegeben. Das Flammschutzmittel wird in einem Trägermaterial voll dispergiert. Als Trägermaterial kommen der Polyesterrohstoff selbst, wie z.B. das Polyethylenterephthalat oder auch andere Polymere, die mit dem Polyesterrohstoff verträglich sind, in Frage.

Erfindungsgemäß kann der UV-Stabilisator bereits beim Polyesterrohstoffhersteller zugegeben oder bei der Folienherstellung in den Extruder zudosiert werden.

Besonders bevorzugt ist die Zugabe des UV-Stabilisators über die Masterbatch-Technologie. Der UV-Stabilisator wird in einem festen Trägermaterial voll dispergiert. Als Trägermaterialien kommen gewisse Harze, der Polyesterrohstoff selbst, wie z.B. das Polyethylenterephthalat oder auch andere Polymere, die mit dem Polyesterrohstoff ausreichend verträglich sind, in Frage.

Wichtig bei der Masterbatch-Technologie ist, daß die Korngröße und das Schüttgewicht des Masterbatches ähnlich der Korngröße und dem Schüttgewicht des Polyesterrohstoffs ist, so daß eine homogene Verteilung und damit eine homogene UV-Stabilisierung erfolgen kann.

Die Polyesterfolien können nach bekannten Verfahren aus Polyesterrohstoff mit ggf. weiteren Rohstoffen, dem Flammschutzmittel, ggf. dem Hydrolysestabilisator, dem UV-Stabilisator und/oder weiteren üblichen Additiven in üblicher Menge von 1,0 bis max. 30 Gew.-% sowohl als Monofolie als auch als mehrschichtige, ggf. koextrudierte Folien m it gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Erfindungswesentlich ist, daß das Masterbatch, welches das Flammschutzmittel und gegebenenfalls den Hydrolysestabilisator enthält, vorkristallisiert bzw. vorgetrocknet wird. Diese Vortrocknung beinhaltet z.B. ein gradielles Erhitzen des Masterbatches unter reduziertem Druck (20 bis 80 mbar, vorzugsweise 30 bis 60 mbar, insbesondere 40 bis 50 mbar) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 bis 160°C, vorzugsweise 20°C bis 150°C, insbesondere 30°C bis 130°C, durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei Temperaturen von 90 bis 180 °C, vorzugsweise von 100 bis 170 °C, insbesondere von 110 bis 160 °C über eine Zeitdauer von 2 bis 8 Stunden, vorzugsweise von 3 bis 7 Stunden, insbesondere von 4 bis 6 Stunden, nachgetrocknet.

Im Rahmen des Coextrusionsverfahrens wird so vorgegangen, daß die der einschichtigen Folie/die den einzelnen Schichten der Folie entsprechende Schmelzelentsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die biaxial gestreckte Folie danach thermofixiert und gegebenenfalls an der zur weiteren Behandlung vorgesehenen Oberflächenschicht corona- oder flammbehandelt wird.

Die biaxiale Verstreckung wird im allgemeinen sequentiell durchgeführt. Dabei wird vorzugsweise zuerst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell rotierenden Walzen. Zum Querverstrecken benutzt man allgemein einen entsprechend geeigneten Kluppenrahmen.

Eine simultane, d.h. gleichzeitige Verstreckung der erfindungsgemäßen Folie in beiden Richtungen (MD-Richtung und TD-Richtung) mit Hilfe eines dafür geeigneten Kluppenrahmens hat sich als nicht zweckmäßig erwiesen. D. h., diese Streckung führt zu einer Folie, die einen zu geringen Weißgrad und eine zu geringe Opazität aufweist.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0: 1, bevorzugt von 3,5:1 bis 4,5:1.

Bei der nachfolgenden Thermofixierung wird die Folie etwa 0,1 bis 10 s lang bei einer Temperatur von 150 bis 250 °C gehalten. Anschließend wird die Folie abgekühlt und dann in üblicher Weise aufgewickelt.

Zur Einstellung weiterer gewünschter Eigenschaften kann die Folie chemisch behandelt werden oder auch corona- bzw. flammbehandelt sein. Die Behandlungsintensität ist so gewählt, daß die Oberflächenspannung der Folie im allgemeinen über 45 mN/m liegt.

Ebenso kann zur Einstellung weiterer Eigenschaften die Folie beschichtet werden. Typische Beschichtungen sind haftvermittelnde, antistatisch, schlupfverbessemd oder dehäsiv wirkende Schichten. Es bietet sich an, diese zusätzlichen Schichten über in-line coating mittels wässriger Dispersionen vor der Querverstreckung auf die Folie aufzubringen.

Der besondere Vorteil der erfindungsgemäßen Folie ist ihr hoher Weißgrad und ihre hohe Opazität bei gleichzeitiger UV-Stabilität und Flammfestigkeit. Überraschenderweise war der Glanz der Folie ebenfalls sehr hoch. Der Weißgrad der Folie beträgt mehr als 70 %, bevorzugt mehr als 75 % und besonders bevorzugt mehr als 80 %. Die Opazität der erfindungsgemäßen Folie beträgt mehr als 55 %, bevorzugt mehr als 60 % und besonders bevorzugt mehr als 65 %. Der Glanz der erfindungsgemäßen Folie beträgt mehr als 80, bevorzugt mehr als 90 und besonders bevorzugt mehr als 100.

Ein weiterer besonderer Vorteil der Erfindung liegt darin, daß bei der Herstellung der Folie immanent anfallendes Regenerat in einer Konzentration von 10 bis 70 Gew.-%, bezogen auf das Gesamtgewicht der Folie, wieder verwendet werden kann, ohne daß dabei die physikalischen Eigenschaften der Folie nennenswert negativ beeinflußt werden. Insbesondere wird durch das Regenerat (im wesentlichen aus Polyesterrohstoff und COC bestehend) die Folie nicht undefiniert in der Farbe verändert, was bei den Folien nach dem Stand der Technik der Fall ist.

Darüber hinaus besteht ein Vorteil der Erfindung darin, daß die Herstellungskosten der erfindungsgemäßen Folie vergleichbar sind mit herkömmlichen opaken Folien nach dem Stand der Technik. Die sonstigen verarbeitungs- und gebrauchsrelevanten Eigenschaften der erfindungsgemäßen Folie bleiben im wesentlichen unverändert oder sind sogar verbessert.

Die Folie eignet sich hervorragend zur Verpackung von licht-und/oder luftempfindlichen Nahrungs- und Genußmitteln. Daneben ist sie auch hervorragend für den Einsatz im industrieellen Bereich, z.B. bei der Herstellung von Prägefolien oder als Etikettenfolie, geeignet. Daneben ist die Folie natürlich besonders geeignet für Bildaufzeichnungspapiere, Druckbögen, magnetische Aufzeichnungskarten, um nur einige mögliche Anwendungen zu nennen.

Das Verabeitungs- und das Wickelverhalten der Folie, insbesondere auf schnelllaufenden Maschinen (Wickler, Metallisierer, Druck- und Kaschiermaschinen) ist ausgesprochen gut. Ein Maß für das Verarbeitungsverhalten ist der Reibungskoeffizient der Folie, der kleiner als 0,6 ist. Das Wickelverhalten wird neben einem guten Dickenprofil, einer hervorragender Planlage und niedriger Reibungskoeffizienten entscheidend durch die Rauhigkeit der Folie beeinflußt. Es hat sich herausgestellt, daß die Wickelung der erfindungsgemäßen Folie insbesondere dann gut ist, wenn unter Einbehalt der anderen Eigenschaften die mittlere Rauhigkeit in einem Bereich von 50 bis 250 nm liegt. Die Rauhigkeit läßt sich u.a. durch Variation der COC-Konzentration und den Verfahrensparametem beim Herstellungsprozess im angegebenen Bereich variieren.

Die nachstehende Tabelle (Tabelle 1) fasst die wichtigsten erfindungsgemäßen Folieneigenschaften noch einmal auf einen Blick und damit ganz besonders illustrativ zusammen.

**Tabelle 1**

| | Erfindungsgem. Bereich | bevorzugt | besonders bevorzugt | Einheit | Messmethode |
|---|---|---|---|---|---|
| **Formulierung** | | | | | |
| Menge an COC in der Basisschicht | 2 - 60 | 4 - 50 | 6 - 40 | % | |
| Glasübergangstemp. des COCs | 70 - 270 | 90 - 250 | 110 - 220 | °C | DIN 73 765 |
| UV-Stabilisator | 0,01 - 5 | 0,1 - 5 | 0,5 - 3 | % | Bewitterung mit Atlas Ci 65 Weather Ometer |
| Flammschutzmittel | 0,5 - 30 | 1,0 - 20 | | % | DIN 4102 |
| **Folieneigenschaften** | | | | | |
| Weißgrad | > 70 | > 75 | > 80 | % | Berger |
| Opazität | > 55 | > 60 | > 65 | % | DIN 53 146 |
| COF | < 0,6 | < 0,55 | < 0,5 | | DIN 53 375 |
| Glanz | > 80 | > 90 | > 100 | | DIN 67 530 |
| Mittlere Rauhigkeit $R_a$ | 50-250 | 60-230 | 70-200 | nm | DIN 4768, Cut-off von 0,25 mm |

Zur Charakterisierung der Rohstoffe und der Folien wurden die folgenden Meßwerte benutzt:

**SV (DCE), IV (DCE)**

Die Standardviskosität SV (DCE) wird angelehnt an DIN 53726 in Dichloressigsäure gemessen.

Die intrinsische Viskosität (IV) berechnet sich wie folgt aus der Standardviskosität (SV)

$$IV\ (DCE) = 6{,}67 \cdot 10^{-4}\ SV\ (DCE) + 0{,}118$$

**Oberflächendefekte, homogene Einfärbung**

Die Oberflächendefekte und die homogene Einfärbung werden visuell bestimmt.

**Bewitterung (beidseitig); UV-Stabilität**

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 W/m$^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben, dann wieder 102 Minuten UV-Licht usw. |

**Gelbwert**

Der Gelbwert YID ist die Abweichung von der Farblosigkeit in Richtung "Gelb" und wird gemäß DIN 6167 gemessen.

**Brandverhalten**

Das Brandverhalten wird nach DIN4102, Teil 2, Baustoffklasse B2, und nach DIN 4102, Teil 1, Baustoffklasse B1, sowie nach dem UL-Test 94 ermittelt.

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels dersogenannten Tintenmethode (DIN 53 364) bestimmt.

**Rauhigkeit**

Die Rauhigkeit Ra der Folie wurde nach DIN 4768 bei einem Cut-off von 0,25 mm bestimmt.

**Weißgrad und Opazität**

Die Bestimmung des Weißgrades und der Opazität erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad, RY, RZ, RX = entsprechende Reflexionsfaktoren bei Einsatz des Y-, Z- und X-Farbmessfilters. Als Weißstandard wir ein Pressling aus Bariumsulfat (DIN 5033, Teil 9) verwendet. Eine ausführliche Beschreibung ist z. B. in Hansl Loos "Farbmessung","Verlag Beruf und Schule, Itzehoe (1989), beschrieben.

**Lichtdurchlässigkeit**

Die Lichtdurchlässigkeit wird in Anlehnung an ASTM-D 1033-77 gemessen.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

**Glasübergangstemperatur**

Die Glasübergangstemperatur $T_g$ wurde anhand von Folienproben mit Hilfe der DSC (Differential Scanning Calorimetry) bestimmt (DIN 73 765). Verwendet wurde ein DSC 1090 der Firma DuPont. Die Aufheizgeschwindigkeit betrug 20 K/min und die Einwaage ca. 12 mg. Im ersten Aufheizvorgang wurde der Glasübergang $T_g$ ermittelt. Die Proben zeigten vielfach eine Enthalpierelaxation (ein Peak) zu Beginn des stufenförmigen Glasübergangs. Als $T_g$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

**Beispiel 1** (erfindungsgemäß)

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Daneben wurden Chips aus COC der Fa. Ticona: ®Topas 6015 (COC bestehend aus 2-Norbornen und Ethylen, siehe auch W. Hatke: Folien aus COC, Kunststoffe 87 (1997) 1, S. 58-62) mit einer Glasübergangstemperatur $T_g$ von etwa 160°C ebenfalls dem Extruderfür die Basisschicht B zugeführt. Der mengenmäßige Anteil des COCs an der Gesamtfolie betrug 10 Gew.-%. Außerdem wurde 1,0 Gew.-% des UV-Stabilisators 2-(4,6-Diphenyl-1,3,5-triazin-2-yl)-5-(hexyl)oxyphenol (® Tinuvin 1577 der Firma Ciba-Geigy, Basel, Schweiz) und 4 Gew.-% phosphorhaltiges Flammschutzmittel zugegeben.

Tinuvin 1577 hat einen Schmelzpunkt von 149 °C und ist bis ca. 330 °C thermisch stabil. Der UV-Stabilisator Tinuvin 1577 wird in Form eines Masterbatches zudosiert. Das Masterbatch setzt sich aus 5 Gew.-% Tinuvin 1577 als Wirkstoffkomponente und 95 Gew.-% PET mit einer Standardviskosität von SC (DCE) = 810 zusammen, was einer intrinsischen Viskosität IV (DCE) von 0,658 dl/g entspricht.

Bei dem Flammschutzmittel handelt es sich um die organische Phosphorverbindung Dimethyl-Methylphosphonat ® Amgard P 1045 der Fa. Albright & Wilson, die in PET löslich ist.

Das Flammschutzmittel wird ebenfalls in Form eines Masterbatches zudosiert. Das Masterbatch setzt sich aus 20 Gew.-% Flammschutzmittel und 80 Gew.-% PET mit einer Standardviskosität SV (DCE) von 810 zusammen.

Beide Masterbatche hatten ein Schüttgewicht von 750 kg/m³. Es wurde durch Extrusion und anschließende stufenweise Orientierung in Längs- und Querrichtung eine weiße, opake einschichtige Folie mit einer Gesamtdicke von 23 µm hergestellt.

Basisschicht B, Mischung aus:

| | |
|---|---|
| 85,0 Gew.-% | Polyethylenterephthalat-Homopolymermit einem SV-Wert von 800 |
| 10,0 Gew.-% | Cycloolefincopolymeren (COC) der Fa. Ticona, Topas 6015 |
| 1,0 Gew.-% | Tinuvin 1577 |
| 4,0 Gew.-% | Amgard P 1045 |

Die Herstellungsbedingungen in den einzelnen Verfahrensschritten waren:

| | | |
|---|---|---|
| Extrusion | Temperaturen Basis-Schicht | 280 °C |
| | Temperatur der Abzugswalze | 30 °C |
| Längsstreckung | Temperatur | 80 - 125°C |

(fortgesetzt)

| | | |
|---|---|---|
| | Längsstreckverhältnis | 4,2 |
| Querstreckung | Temperatur | 80 - 135 °C |
| | Querstreckverhältnis | 4,0 |
| Fixierung | Temperatur | 230°C |
| | Dauer | 3 s |

Die Folie hatte die geforderten guten Eigenschaften und zeigt das gewünschte Handling und das gewünschte Verarbeitungsverhalten. Die erzielten Eigenschaften derart hergestellter Folien sind in der Tabelle 2 dargestellt.

**Beispiel 2** (erfindungsgemäß)

Im Vergleich zu Beispiel 1 wurde jetzt in die Basisschicht 50 Gew.-% Regenerat dazugegeben. Die Menge an COC in der damit hergestellten Folie betrug wiederum 10 Gew.-%, die an UV-Stabilisator 1 Gew.-%, die an Flammschutzmittel 4 Gew.-%. Die Verfahrensparameter wurden im Vergleich zu Beispiel 1 nicht geändert. Es wurde die Gelbverfärbung der Folie visuell beobachtet. Anhand der Tabelle 2 sieht man, daß kaum eine Gelbverfärbung der Folie sichtbar geworden ist.
Basisschicht B, Mischung aus:

| | |
|---|---|
| 42,5 Gew.-% | Polyethylenterephthalat-Homopolymermit einem SV-Wert von 800 |
| 50,0 Gew.-% | Regenerat (90 Gew.-% Polyester + 10 Gew.-% Topas 6015 + 1 Gew.-% Tinuvin 1577) |
| 5,0 Gew.-% | Cycloolefincopolymeren (COC) der Fa. Ticona, Topas 6015 |
| 0,5 Gew.-% | Tinuvin 1577 |
| 2,0 Gew.-% | Amgard P 1045 |

**Beispiel 3** (erfindungsgemäß)

Im Vergleich zu Beispiel 1 wurde jetzt eine Folie mit einer Dicke von 96 µm hergestellt. Die Menge an COC in der Folie betrug 8 Gew.-%, die an Tinuvin 1577 1 Gew.-%, die an Flammschutzmittel 4 Gew.-%. Die Verfahrensparameter wurden im Vergleich zu Beispiel 1 nicht geändert. Es wurde die Gelbverfärbung der Folie visuell beobachtet.
Anhand der Tabelle 2 sieht man, daß keine Gelbverfärbung der Folie sichtbar geworden ist.
Basisschicht B, Mischung aus:

| | |
|---|---|
| 87,0 Gew.-% | Polyethylenterephthalat-Homopolymer mit einem SV-Wert von 800 |
| 8,0 Gew.-% | Cycloolefincopolymeren (COC) der Fa. Ticona, Topas 6015 |
| 1,0Gew.-% | Tinuvin 1577 |
| 4,0Gew.-% | Amgard P 1045 |

**Beispiel 4** (erfindungsgemäß)

Im Vergleich zu Beispiel 3 wurde jetzt in die Basis 50 Gew.-% Regenerat dazugegeben. Die Menge an COC in der Folie betrug wiederum 8 Gew.-%, die an Tinuvin 1577 betrug 1 Gew.-% und die an Flammschutzmittel 4,0 Gew.-%. Die Verfahrensparameterwurden im Vergleich zu Beispiel 1 nicht geändert. Es wurde die Gelbverfärbung der Folie visuell beobachtet. Anhand der Tabelle 2 sieht man, daß kaum eine Gelbverfärbung der Folie sichtbar geworden ist.
Basisschicht B, Mischung aus:

| | |
|---|---|
| 43,5 Gew.-% | Polyethylenterephthalat-Homopolymermiteinem SV-Wert von 800 |
| 50,0 Gew.-% | Eigenregenerat (90 Gew.-% Polyester + 10 Gew.-% Topas 6015 + 1 Gew.-% Tinuvin 1577) |
| 4,0 Gew.-% | Cycloolefincopolymeren (COC) der Fa. Ticona, Topas 6015 |
| 0,5Gew.-% | Tinuvin 1577 |
| 2,0Gew.-% | Amgard P 1045 |

**Vergleichsbeispiel 1**

Es wurde Beispiel 1 aus der DE-A 2 353 347 nachgearbeitet. In Abänderung des Beispiels wurden zusätzlich 50 Gew.-% Regenerat mitverarbeitet. Anhand der Tabelle 2 sieht man, daß eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.

Basisschicht B, Mischung aus:

| | |
|---|---|
| 47,5 Gew.-% | Polyethylenterephthalat-Homopolymer mit einem SV-Wert von 800 |
| 50,0 Gew.-% | Eigenregenerat (95 Gew.-% Polyester + 5 Gew.-% Polypropylen) |
| 2,5 Gew.-% | Polypropylen |

**Vergleichsbeispiel 2**

Es wurde Beispiel 1 aus der EP-A 0 300 060 nachgearbeitet. In Abänderung des Beispiels wurden zusätzlich 50 Gew.-% Regenerat mitverarbeitet. Anhand der Tabelle 2 sieht man, daß eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.

Basisschicht B, Mischung aus:

| | |
|---|---|
| 45,0 Gew.-% | Polyethylenterephthalat-Homopolymermit einem SV-Wert von 800 |
| 50,0 Gew.-% | Eigenregenerat (95 Gew.-% Polyester + 5 Gew.-% Polypropylen) |
| 5,0 Gew.-% | Polypropylen |

**Vergleichsbeispiel 3**

Es wurde Beispiel 1 aus der EP-A 0 360 201 nachgearbeitet. In Abänderung des Beispiels wurden zusätzlich 50 Gew.-% Regenerat mitverarbeitet. Anhand der Tabelle 2 sieht man, daß eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.

Basisschicht B, Mischung aus:

| | |
|---|---|
| 40,0 Gew.-% | Polyethylenterephthalat-Homopolymer mit einem SV-Wert von 800 |
| 50,0 Gew.-% | Eigenregenerat (95 Gew.-% Polyester + 5 Gew.-% Polypropylen) |
| 10,0 Gew.-% | Polypropylen |

**Vergleichsbeispiel 4**

Es wurde Beispiel 1 aus der DE-A 195 40 277 nachgearbeitet. In Abänderung des Beispiels wurden zusätzlich 50 Gew.-% Regenerat mitverarbeitet. Anhand der Tabelle 2 sieht man, daß eine deutliche Gelbverfärbung der Folie sichtbar geworden ist. Außerdem ist die Rauhigkeit der Folie für viele Anwendungen deutlich zu hoch und der Glanz für viel Anwendungen zu niedrig. Das ist aller Wahrscheinlichkeit auf die Verwendung anderer polymerer Additive zurückzuführen.

Basisschicht B, Mischung aus:

| | |
|---|---|
| 43,5 Gew.-% | Polyethylenterephthalat-Homopolymer mit einem SV-Wert von 800 |
| 50,0 Gew.-% | Eigenregenerat (95 Gew.-% Polyester + 5 Gew.-% Polystyrol) |
| 6,5 Gew.-% | Polystyrol |

**Tabelle 2**

| Beispiel | Dicke der Folie | Schichtaufbau | Additiv zum PE-Rohstoff | Menge an Additiv in Basisschicht | Glasübergangstemperatur des Additivs | Weißgrad | Opazität | Beurteilung des Gelbgrades der Folie | Glanz | Reibung COF | Mittlere Rauhigkeit $R_a$ | |
|---|---|---|---|---|---|---|---|---|---|---|---|---|
| | µm | | | % | °C | % | % | | | A-Seite gegen C-Seite | nm A-Seite | nm C-Seite |
| B 1 | 23 | B | COC | 10 | 170 | 75 | 75 | ++ | 115 | 0,52 | 120 | 120 |
| B 2 | 23 | B | COC | 10 | 170 | 76 | 80 | + | 120 | 0,50 | 110 | 110 |
| B 3 | 96 | B | COC | 8 | 170 | 85 | 85 | ++ | 125 | 0,42 | 100 | 100 |
| B 4 | 96 | B | COC | 8 | 170 | 86 | 90 | + | 130 | 0,35 | 98 | 98 |
| VB 1 | 155 | B | Polypropln. | 5 | -10 | 80 | 70 | - | 46 | 0,45 | 410 | 410 |
| VB 2 | 100 | B | Polypropln. | 10 | -10 | 88 | 80 | - | 57 | 0,45 | 180 | 180 |
| VB 3 | 100 | ABA | Polypropln. | 20 | -10 | 92 | 89 | - | 54 | 0,25 | 370 | 370 |
| VB 4 | 125 | B | Polystyrol | 13 | 100 | 82 | 82 | - | 51 | 0,35 | 480 | 480 |

**Zeichenerklärung für den Gelbgrad der produzierten Folien:**

++ : keine Gelbfärbung ist zu erkennen

\+ : geringe Gelbfärbung ist zu erkennen

\- : deutliche Gelbfärbung ist zu erkennen

Alle nach den Beispielen 1 bis 4 und den Vergleichsbeispielen 1 bis 4 hergestellten Folien wurden je 1000 Stunden Bewitterung pro Seite mit Atlas Ci 65 Weather Ometer ausgesetzt. Die nach den erfindungsgemäßen Beispielen 1 bis 4 hergestellten Folien zeigten keine signifikanten Eigenschaftsänderungen.

Die Folien der Vergleichsbeispiele 1 bis 4 hingegen zeigten nach 1000 Stunden Bewitterung mit Atlas Cl 65

Weather Ometer an den Oberflächen Risse und Versprödungserscheinungen auf. Ein präzises Eigenschaftsprofil - insbesondere die mechanischen Eigenschaften - konnte daher an diesen Folien nicht mehr gemessen werden. Außerdem zeigen die Folien eine visuell deutlich sichtbare Gelbfärbung.

Alle nach den Beispielen 1 bis 4 und den Vergleichsbeispielen 1 bis 4 hergestellten Folien wurden über eine Zeitdauer von 200 Stunden bei einer Temperatur von 100 °C im Umlufttrocknerschrank behandelt. Bei den Folien der Beispiele 1 bis 4 sind die mechanischen Eigenschaften unverändert. Die Folien zeigen nicht die geringsten Versprödungserscheinungen, während die Folien der Vergleichsbeispiele mit dem bloßen Auge erkennbare Risse aufweisen und bei dem Versuch, sie zu knicken, in Stücke zerbrechen.

Die Folien nach den Beispielen 1 bis 4 erfüllen nach DIN 4102 Teil 2/Teil 1 die Baustoffklassen B 2 und B 1 und sie bestehen den UL-Test 94, die Folien der Vergleichsbeispiele 1 bis 4 dagegen nicht.

## Patentansprüche

1. Weiße, biaxial orientierte, schwer entflammbare und UV-stabilisierte Polyesterfolie umfassend mindestens eine Schicht, **dadurch gekennzeichnet, daß** zumindest diese Schicht ein Cycloolefincopolymeres (COC) in einer Menge von 2 bis 60 Gew.-%, bezogen auf das Gewicht dieser Schicht enthält, wobei die Glasübergangstemperatur des COCs im Bereich von 70 bis 270 °C liegt, und daß die Schicht mindestens einen UV-Stabilisator als Lichtschutzmittel und ein Flammschutzmittel enthält, wobei mindestens das Flammschutzmittel dem Polyester bei der Folienherstellung als Masterbatch direkt zudosiert wird, vorzugsweise auch der UV-Stabilisator.

2. Polyesterfolie nach Anspruch 1, **dadurch gekennzeichnet, daß** das COC Polynorbornen, Polydimethyloctahydronaphthalin, Polycyclopenten oder Poly(5-methyl)norbornen enthält.

3. Polyesterfolie nach Anspruch 1 oder 2, **dadurch gekennzeichnet, daß** das COC eine Glasübergangstemperatur im Bereich von 90 bis 250 °C aufweist, daß die Menge an UV-Stabilisator im Bereich von 0,01 bis 5,0 Gew.-%, bezogen auf das Gesamtgewicht der Schicht, und daß die Menge an Flammschutzmittel im Bereich zwischen 0,5 und 30 Gew.-%, vorzugsweise zwischen 1 und 20 Gew.-%, bezogen auf das Gewicht der Schicht, liegt.

4. Polyesterfolie nach einem der Ansprüche 1 oder 2, **dadurch gekennzeichnet, daß** das Cycloolefincopolymere (COC) eine Glasübergangstemperatur im Bereich von 110 bis 220 °C aufweist und daß der UV-Stabilisator ausgewählt ist aus 2-Hydroxybenzotriazolen und/oder Triazinen.

5. Polyesterfolie nach einem oder mehreren der Ansprüche 1 bis 4, **dadurch gekennzeichnet, daß** die Folie einen Weißgrad von mehr als 70 % aufweist und daß der UV-Stabilisator 2-(4,6-Diphenyl-1,3,5-triazin-2-yl)-5-(hexyl)oxy-phenol und/oder 2,2'-Methylen-bis(6-(2H-benzotriazol-2-yl)-4-(1,1,2,2-tetramethylpropyl)-phenol ist.

6. Polyesterfolie nach einem oder mehreren der Ansprüche 1 bis 5, **dadurch gekennzeichnet, daß** die Folie eine Opazität von mehr als 55 % aufweist und daß sie als Flammschutzmittel organische Phosphorverbindungen enthält, insbesondere solche organischen Phosphorverbindungen, die in Polyethylenterephthalat löslich sind.

7. Polyesterfolie nach einem oder mehreren der Ansprüche 1 bis 6, **dadurch gekennzeichnet, daß** die Folie einen Glanz von mehr als 80 aufweist und daß sie als Flammschutzmittel den Bisglykolester von 2-Carboxyethyl-methylphosphinsäure bzw. von deren cyclischem Anhydrid, dem 2-Methyl-2,5-dioxo-1,2-oxophospholan enthält.

8. Polyesterfolie nach einem oder mehreren der Ansprüche 1 bis 7, **dadurch gekennzeichnet, daß** die Schicht 0,5 bis 25 Gew.-% weiterer vakuoleniniziierender und/oder weißer Füllstoffe und/oder Pigment enthält, jeweils bezogen auf das Gewicht der Schicht.

9. Polyesterfolie nach einem oder mehreren der Ansprüche 1 bis 8, **dadurch gekennzeichnet, daß** auf der COC-haltigen Schicht eine Deckschicht angeordnet ist und daß der UV-Stabilisator und das Flammschutzmittel in der/den Deckschichten enthalten sind.

10. Polyesterfolie nach Anspruch 9, **dadurch gekennzeichnet, daß** zwischen der COC-haltigen Schicht und der Deckschicht eine Zwischenschicht angeordnet ist.

11. Polyesterfolie nach einem oder mehreren der Ansprüche 1 bis 8, **dadurch gekennzeichnet, daß** die Folie einschichtig ist und aus der COC-haltigen Schicht besteht.

**12.** Verwendung einer Folie nach einem der Ansprüche 1 bis 11 zur Verpackung von licht- und/oder luftempfindlichen Nahrungs- und Genußmitteln oder für den Einsatz im industrieellen Bereich, z.B. bei der Herstellung von Prägefolien oder als Etikettenfolie, oder für Bildaufzeichnungspapiere, Druckbögen oder magnetische Aufzeichnungskarten.

**Claims**

**1.** A white, biaxially oriented, flame-retardant and UV-resistant polyester film comprising at least one layer, wherein at least this layer comprises, based on the weight of this layer, from 2 to 60% by weight of a cycloolefin copolymer (COC), where the glass transition temperature of the COC is within the range from 70 to 270°C, and wherein the layer comprises at least one UV stabilizer as light stabilizer and a flame retardant, where at least the flame retardant, and preferably also the UV stabilizer, is fed directly as a masterbatch to the polyester during film production.

**2.** The polyester film as claimed in claim 1, wherein the COC comprises polynorbornene, polydimethyloctahydronaphthalene, polycyclopentene or poly(5-methyl)norbornene.

**3.** The polyester film as claimed in claim 1 or 2, wherein the COC has a glass transition temperature within the range from 90 to 250°C, wherein the amount of UV stabilizer is within the range from 0.01 to 5.0% by weight, based on the total weight of the layer, and wherein the amount of flame retardant is within the range from 0.5 to 30% by weight, preferably from 1 to 20% by weight, based on the weight of the layer.

**4.** The polyester film as claimed in claim 1 or 2, wherein the cycloolefin copolymer (COC) has a glass transition temperature within the range from 110 to 220°C, and wherein the UV stabilizer has been selected from 2-hydroxybenzotriazoles and/or from triazines.

**5.** The polyester film as claimed in one or more of claims 1 to 4, wherein the whiteness of the film is above 70%, and wherein the UV stabilizer is 2-(4,6-diphenyl-1,3,5-triazin-2-yl)-5-hexyloxyphenol and/or 2,2'-methylenebis(6-(2H-benzotriazol-2-yl)-4-(1,1,2,2-tetramethylpropyl)phenol).

**6.** The polyester film as claimed in one or more of claims 1 to 5, wherein the opacity of the film is above 55%, and wherein the film comprises organic phosphorus compounds as flame retardants, in particular organic phosphorus compounds soluble in polyethylene terephthalate.

**7.** The polyester film as claimed in one or more of claims 1 to 6, wherein the gloss of the film is above 80, and wherein the film comprises, as flame retardant, the bisglycol ester of 2-carboxyethyl(methyl)phosphinic acid or of the cyclic anhydride thereof, 2-methyl-2,5-dioxo-1,2-oxophospholane.

**8.** The polyester film as claimed in one or more of claims 1 to 7, wherein the layer comprises from 0.5 to 25% by weight of other vacuole-inducing and/or white fillers and/or pigment, in each case based on the weight of the layer.

**9.** The polyester film as claimed in one or more of claims 1 to 8, wherein an outer layer has been arranged on the COC-containing layer, and wherein the UV stabilizer and the flame retardant are present in the outer layer(s).

**10.** The polyester film as claimed in claim 9, wherein an intermediate layer has been arranged between the COC-containing layer and the outer layer.

**11.** The polyester film as claimed in one or more of claims 1 to 8, wherein the film has one layer and is composed of the COC-containing layer.

**12.** The use of a film as claimed in any of claims 1 to 11 for packing foods or other consumable items which are sensitive to light and/or to air, or for use in industry, e.g. in the production of hot-stamping foils or as a label film, or for image-recording papers, printed sheets or magnetic recording cards.ow coloration detectable

**Revendications**

**1.** Film polyester blanc, orienté biaxialement, difficilement inflammable et stabilisé vis-à-vis des UV, comprenant au

moins une couche, **caractérisé en ce que** au moins ladite couche contient un copolymère cyclooléfinique (COC) à raison de 2 à 60 % en poids par rapport à ladite couche, la température de transition vitreuse du COC étant comprise dans la plage de 170 à 270°C et **en ce que** la couche contient au moins un stabilisant UV à titre d'agent de protection à la lumière et un agent ignifuge, du moins l'agent ignifuge et de préférence aussi le stabilisant UV étant dosé directement au polyester lors de la fabrication du film sous forme de mélange maître.

**2.** Film polyester selon la revendication 1, **caractérisé en ce que** le COC contient du polynorbornène, de la polydiméthyloctahydronaphtaline, du polycyclopentène ou du poly(5-méthyl)norbornène.

**3.** Film polyester selon la revendication 1 ou 2, **caractérisé en ce que** le COC présente une température de transition vitreuse comprise dans la plage de 90 à 250°C, **en ce que** la quantité en stabilisant UV est comprise dans la plage de 0,01 à 5,0 % en poids par rapport au poids total de la couche, et **en ce que** la quantité en agent ignifuge est comprise entre 0,5 et 30 %, de préférence entre 1 et 20 % en poids par rapport au poids de la couche.

**4.** Film polyester selon la revendication 1 ou 2, **caractérisé en ce que** le copolymère cyclooléfinique (COC) présente une température de transition vitreuse comprise dans la plage de 110 à 220°C et **en ce que** le stabilisant UV est choisi parmi les 2-hydroxybenzotriazoles et/ou les triazines.

**5.** Film polyester selon l'une quelconque des revendications 1 à 4, **caractérisé en ce que** le film présente un degré de blancheur supérieur à 70 % et **en ce que** le stabilisant UV est le 2-4,6-diphényl-(1,3,5-triazine-2-yl)-5-(hexyl) oxy-phénol et/ou 2,2'-méthylène-bis(6-(2H-benzotriazol-2-yl)-4-(1,1,2,2-tétraméthyl-propyl)-phénol.

**6.** Film polyester selon l'une quelconque des revendications 1 à 5, **caractérisé en ce que** le film présente une opacité supérieure à 55 % et **en ce qu'**il contient à titre d'agent ignifuge des composés phosphoriques, en particulier des composés organophosphoriques solubles dans le polyéthylène téréphtalate.

**7.** Film polyester selon l'une quelconque des revendications 1 à 6, **caractérisé en ce que** le film présente une brillance supérieure à 80 et **en ce qu'**il contient à titre d'agent ignifuge le bisglycolate de l'acide 2-carboxyéthyl-méthylphosphinique ou de son anhydride cyclique, le 2-méthyl-2,5-dioxo-1,2-oxophospholane.

**8.** Film polyester selon l'une quelconque des revendications 1 à 7, **caractérisé en ce que** la couche contient 0,5 à 25 % en poids d'autres matières de charge blanches et/ou initiant des vacuoles et/ou des pigments respectivement par rapport au poids de la couche.

**9.** Film polyester selon l'une quelconque des revendications 1 à 8, **caractérisé en ce que** sur la couche contenant le COC est disposé une couche de couverture et **en ce que** le stabilisant UV et l'agent ignifuge sont contenus dans la/les couche(s) de couverture.

**10.** Film polyester selon la revendication 9, **caractérisé en ce qu'**entre la couche contenant le COC et la couche de couverture est disposé une couche intermédiaire.

**11.** Film polyester selon l'une quelconque des revendications 1 à 8, **caractérisé en ce que** le film est monocouche et est composé de la couche contenant le COC.

**12.** Utilisation d'un film selon l'une quelconque des revendications 1 à 11 pour l'emballage d'aliments ou stimulants sensibles à la lumière et/ou à l'air ou pour une mise en oeuvre dans le domaine industriel, par exemple lors de la préparation de films grainés, de film d'étiquette ou pour des papiers d'enregistrement d'image, des feuilles d'impression ou des cartes d'enregistrement magnétique.